# EUROPÄISCHE PATENTSCHRIFT

(11) **EP 3 535 167 B1**
(45) Veröffentlichungstag und Bekanntmachung des Hinweises auf die Patenterteilung: **08.04.2020**
(21) Anmeldenummer: 18705136.2
(22) Anmeldetag: 13.02.2018
(51) Int. Cl.: B60R 21/233

(54) **DOPPELAIRBAG-SYSTEM ZUR ABSICHERUNG GRÖSSERER ABSTÄNDE DER INSASSEN**
DOUBLE AIRBAG SYSTEM FOR PROTECTING LARGER PASSENGER SPACES
SYSTÈME DE DOUBLE COUSSIN DE SÉCURITÉ GONFLABLE DESTINÉ À SÉCURISER DES DISTANCES PLUS IMPORTANTES PAR RAPPORT AUX PASSAGERS

(30) Priorität: 14.02.2017 DE 102017202332
(43) Veröffentlichungstag der Anmeldung: 11.09.2019
(73) Patentinhaber: Audi AG, 85045 Ingolstadt (DE)
(72) Erfinder: SKRODZKI, Tobias, 85080 Gaimersheim (DE)
(86) Internationale Anmeldenummer: PCT/EP2018/053487
(87) Internationale Veröffentlichungsnummer: WO 2018/149801

(56) Entgegenhaltungen:
- DE-A1- 10 333 991
- JP-A- H11 245 759
- JP-A- 2008 179 173

## Beschreibung

Die vorliegende Erfindung betrifft ein Airbagsystem für ein Fahrzeug mit einem ersten Airbag und einem zweiten Airbag, der in bestimmungsgemäßer Hauptabstützrichtung größtenteils über dem ersten Airbag angeordnet ist und beide Airbags zeitgleich auslösbar sind. Darüber hinaus betrifft die vorliegende Erfindung ein Verfahren zum Betreiben eines Airbagsystems für ein Fahrzeug, wobei das Airbagsystem einen ersten und einen zweiten Airbag aufweist, der in bestimmungsgemäßer Hauptabstützrichtung größtenteils über dem ersten Airbag angeordnet ist und beide Airbags zeitgleich auslösbar sind.

Airbags in Fahrzeugen tragen erheblich zur Erhöhung der Insassensicherheit bei. Die Größe eines Airbags ist durch verschiedene physikalische Parameter begrenzt. Er ist derzeit in seinem Volumen limitiert, da ein einzelner Airbag mit zunehmenden Volumen instabil wird. Zudem können größere Airbags nicht so schnell aufgeblasen werden. Eine Aufblasvorrichtung für Airbags kann nicht beliebig große Luftsäcke in einer benötigten Zeit füllen. Befinden sich die Fahrzeuginsassen in der vorgesehen Standard-Sitzposition, so reichen die heute verfügbaren Airbagsysteme aus, um die Fahrzeuginsassen zu schützen. Eine Standard-Sitzposition ist jene Sitzposition, welche heute in Fahrzeugen vorgesehen ist, bei denen die Fahrzeugführung einer Person überlassen bleibt. Eine solche Standard-Sitzposition nimmt beispielsweise ein Fahrer oder Beifahrer auf seinem Sitz ein, wobei dieser in Fahrtrichtung blickt.

Aufgrund der Fortschritte beim autonomen Fahren beziehungsweise beim pilotierten Fahren ist es nicht immer zwingend nötig, dass die Fahrzeuginsassen in ihren Standard-Sitzpositionen verbleiben müssen. Daher entsteht das Bedürfnis, die Standard-Sitzposition zu verlassen und eine andere Position innerhalb des Fahrzeugs einzunehmen. Solche von den Standard-Sitzpositionen abweichende Sitzpositionen werden oft als "out-of-position" Positionen (OoP-Positionen) bezeichnet. Befindet sich ein Fahrzeuginsasse in einer OoP-Position, so ist er nicht länger im vorgesehenen Schutzbereich eines Airbags positioniert. Auch andere verschiedene Situationen und Lastfälle führen dazu, dass ein Fahrzeuginsasse nicht mehr optimal von einem Airbag geschützt wird. Solche Situationen sind beispielsweise Fahrzeuginsassen, die nicht angegurtet sind, sogenannte passive Lastfälle, oder sich von einem Armaturenbrett entfernen, um beispielsweise eine Schlafposition einzunehmen. Ebenfalls denkbar sind sogenannte "Oblique-Lastfälle", in denen ein Fahrzeuginsasse schräg auf einen Airbag aufschlägt. Solche von der Standard-Sitzposition abweichende Sitzpositionen werden im Folgenden durch die OoP-Positionen beschrieben. Auch in diesen Fällen ist es äußerst wünschenswert, wenn bei einem Unfall ein Airbagsystem vorhanden ist, das die Fahrzeuginsassen, die sich in einer OoP-Position befinden, effektiv schützen kann. Solche OoP-Positionen werden durch das pilotierte beziehungsweise autonome Fahren möglich, da ein Fahrer nicht ständig die Kontrolle über sein Fahrzeug ausüben muss. Um den Fahrzeuginsassen mehr Freiheiten bei der Auswahl der Sitzpositionen zugestehen zu können, ohne sie dabei einem allzu großen Verletzungsrisiko bei einem Unfall auszusetzen, sind größere, voluminösere und stabilere Airbags nötig, die dennoch in sehr kurzer Zeit gefüllt sein müssen. Dies gelingt mit heutigen Systemen und Techniken nicht beziehungsweise nur unzureichend.

Die Druckschrift DE 100 52 599 A1 offenbart einen Doppelairbag, der aus zwei übereinander gelagerten Airbags besteht. Der erste Airbag wird im Volumen sieben Zentimeter flacher gehalten wie der herkömmliche und mit üblichem Luftdruck gefüllt. Der zweite Airbag wird in dem eingesparten Volumen platziert, jedoch mit vermindertem Luftdruck gefüllt, damit er den Kopf wie ein Federkissen auffängt.

Die Gebrauchsmusterschrift DE 201 07 108 U1 betrifft eine Airbag-Rastereinstellung auf Körpergröße. Die Rastereinstellung von 1,5 Meter bis 2,0 Meter ist in 5 Zentimeter Rastereinstellung der Körpergröße angepasst.

Die Druckschrift DE 60 2005 002 762 T2 betrifft eine Doppelairbagvorrichtung mit einem Doppelairbag und einem Abstützairbag. Der Doppelairbag kann dabei einen linken und einen rechten Airbag umfassen. Diese Druckschrift beschreibt exemplarische Operationen des Airbagsystems. Dabei können sich bestimmte Airbags entfalten, andere nicht. Der Aufblasgrad des Doppelairbags kann abhängig von der Sitzposition und der Größe des Fahrgasts angepasst werden.

Die Druckschrift KR 10 2001 00 555 79 A beschreibt ein Doppelairbag-System. Ein erster Airbag ist unterhalb eines zweiten Airbags angeordnet. Zwischen beiden Airbags sind steuerbare Luftdüsen installiert. Durch die Steuerung dieser Luftdüsen kann die Luftmenge, welche in den zweiten Airbag gelangen soll, gesteuert werden.

Die Druckschrift DE 103 33 991 A1 offenbart ein Doppelairbagsystem, bei dem die beiden Airbags unabhängig voneinander ausgelöst werden können, wobei der erste Airbag in Hauptabstützrichtung über dem zweiten Airbag angeordnet ist. Die vorliegenden Druckschriften geben keine Anhaltspunkte, wie eine Aufblaszeit eines Airbags verkürzt werden kann oder wie größere, stabiler Airbags im ähnlichen Zeithorizont wie ein einzelner Airbag in Abhängigkeit von der Sitzposition eines Fahrzeuginsassen bereitgestellt werden können.

Die Aufgabe der vorliegenden Erfindung besteht somit darin, während der heutzutage realistischen Aufblaszeit eines Airbags ein größeres Airbagvolumen bereitzustellen als bisher. Es soll ein entsprechendes Airbagsystem sowie ein korrespondierendes Betriebsverfahren zur Verfügung gestellt werden.

Erfindungsgemäß wird diese Aufgabe durch ein Airbagsystem für ein Fahrzeug nach Anspruch 1 gelöst. Erfindungsgemäß wird außerdem ein Verfahren nach Anspruch 8 bereitgestellt. Vorteilhafte Weiterbildungen der Erfindung ergeben sich aus den Unteransprüchen.

Gemäß der vorliegenden Erfindung ist ein Airbagsystem für ein Fahrzeug mit einem ersten und einem zweiten Airbag vorgesehen. Der zweite Airbag ist in bestimmungsgemäßer Hauptabstützrichtung größtenteils über dem ersten Airbag angeordnet. Beide Airbags sind zeitgleich auslösbar. Die beiden Airbags sind in einem Airbagmodul angeordnet. Beide Airbags können jeweils wenigstens eine separate Gaszufuhr aufweisen, die ebenfalls in dem Airbagmodul angeordnet sein kann. Aufgrund der unabhängigen Gaszufuhr für die jeweiligen Airbags können beide Airbags zeitgleich ausgelöst werden. Die beiden Airbags aus erstem und zweitem Airbag können als neue Einheit aufgefasst werden. Diese neue Einheit wird im Folgenden auch Kombinationsairbag genannt. Er kann sich gegebenenfalls schneller und bei Auslösung beider Airbags tiefer ins Fahrzeuginnere entfalten. Bei OoP-Positionen der Fahrzeuginsassen kann dies lebensrettend sein. Dieses Airbagvolumen kann sich aus mehreren Airbags zusammensetzen. Ein typisches Airbagvolumen beträgt etwa 90 Liter. Für die OoP-Lastfälle sind jedoch deutlich größere Airbagvolumina nötig. Das Volumen des Kombinationsairbags ist größer als das Volumen eines einzelnen Airbags. Beispielsweise können beide Airbags 90 Liter Volumen aufweisen. Der Kombinationsairbag hätte in diesem Fall ein Volumen von 180 Liter. Vorteilhaft ist es, wenn der Kombinationsairbag im ähnlichen Zeitrahmen wie ein einzelner Airbag aufgeblasen wird. Diese Airbags sollen eine neue stabile Einheit bilden, um den Fahrzeuginsassen ausreichend Schutz bieten zu können.

Das Airbagsystem zeichnet sich dadurch aus, dass beide Airbags nicht nur zeitgleich, sondern darüber hinaus auch unabhängig voneinander auslösbar sind. Es ist also möglich, dass der zweite Airbag ausgelöst wird, ohne dass der erste Airbag ausgelöst wird. Das Airbagsystem kann eine Steuereinrichtung umfassen, welche festlegt, welcher Airbag ausgelöst wird und welcher nicht. Werden beide Airbags ausgelöst, so entfaltet sich der zweite Airbag auf der Oberfläche des ersten Airbags. Aufgrund der separaten Gaszufuhr für die beiden Airbags können diese beiden Airbags zeitgleich entfaltet werden. Dabei ist der zweite Airbag größtenteils über dem ersten Airbag in bestimmungsgemäßer Hauptabstützrichtung angeordnet. Die Hauptabstützrichtung wird durch die innere Konstruktion des Airbagmoduls, also relativ zu dem Airbagmodul bestimmt. Der Kombinationsairbag aus erstem und zweitem Airbag stellt ein entsprechend größeres Volumen bereit, ohne dabei eine wesentlich größere Aufblaszeit zu benötigen. Dies wäre ein entscheidender Vorteil, da es bei einem Unfall äußerst wichtig ist, dass der Kombinationsairbag rechtzeitig, d.h. binnen weniger Millisekunden vollständig aufgeblasen ist. Dies hat den erheblichen Vorteil, dass für die Fahrzeuginsassen auch im Falle von OoP-Positionen ein wirksamer Schutz bereitgestellt werden kann.

Die vorliegende Erfindung sieht vor, dass beide Airbags von einem gemeinsamen Airbagmodul befüllbar sind und dass beide Airbags von einer Steuereinrichtung angesteuert werden können und sie zuverlässig zusammenwirken können.

Eine weitere Ausgestaltung der vorliegenden Erfindung sieht vor, dass das Airbagmodul Gasgeneratoren zum Befüllen der Airbags aufweist. Diese Gasgeneratoren sind dafür konzipiert, die Airbags im Zeitbereich von Millisekunden mit Gas zu füllen. Die Gasgeneratoren können beispielsweise als Sprengkapseln ausgebildet sein. Diese entwickeln durch eine chemische Reaktion Verbrennungsgase, welche die Airbags mit Gas befüllen. Die genaue Zusammensetzung der Verbrennungsgase hängt von der chemischen Reaktion ab. Die chemische Reaktion zur Erzeugung der Verbrennungsgase ist dabei vorteilhafterweise derart konzipiert, dass eine genügend hohe Gasmenge in einem Zeitrahmen von weniger als 25 Millisekunden bereitgestellt werden kann, um die Airbags schnell genug aufzublasen. Vorzugsweise enthalten die Verbrennungsgase einen hohen Anteil an einem feuerhemmenden Gas, wie zum Beispiel Stickstoff. Gerät ein Fahrzeug durch einen Unfall in Brand, werden die Airbags vermutlich zerstört. Sind die dabei entweichenden Gase feuerhemmend, wird ein bestehender Brand nicht zusätzlich weiter angefacht. Sind die Gasgeneratoren richtig ausgelegt, so kann bei einem Unfall das Airbagsystem seine Schutzwirkung rechtzeitig bereitstellen.

Eine weitere Ausführungsform der vorliegenden Erfindung sieht vor, dass der zweite Airbag über einen gasdichten Einfüllschlauch befüllbar ist. Dieser Einfüllschlauch stellt für den zweiten Airbag eine eigene Gaszufuhr bereit. Zudem ist ein Entweichen der Verbrennungsgase aus dem Einfüllschlauch nicht möglich. Damit wird sichergestellt, dass die Verbrennungsgase in den zweiten Airbag gelangen und ihn auch entfalten. Zudem wird durch den gasdichten Einfüllschlauch verhindert, dass das entweichende Gas das Airbagsystem beschädigt. Entweichende Verbrennungsgase könnten beispielsweise Fahrzeugteile umherschleudern und die Fahrzeuginsassen verletzen, während zugleich der Airbag nicht vollständig aufgeblasen wird. Damit wäre kein ausreichender Schutz für die Fahrzeuginsassen mehr vorhanden. Ein gasdichter Einfüllschlauch steigert die Sicherheit des Airbagsystems erheblich.

Vorzugsweise ist in einer weiteren vorteilhaften Ausbildung der Erfindung der erste Airbag ringförmig um den Einfüllschlauch herum angeordnet. Da die Erfindung vorsieht, dass beide Airbags auslösen können und diese zusammen einen größeren Schutz bereitstellen, ist es sinnvoll, dass beide Airbags derart angeordnet sind, ohne sich gegenseitig zu behindern. Eine ringförmige Anordnung des ersten Airbags um des zweiten Airbags erlaubt es, dass beide Airbags unabhängig voneinander auslösbar sind und sie dennoch in sinnvoller Weise zusammenwirken können. Werden beide Airbags ausgelöst, so bildet sich der zweite Airbag größtenteils auf der Oberfläche des ersten Airbags aus. Er entfaltet sich also nicht vom Armaturenbrett aus, sondern bereits vom ersten Airbag ausgehend in Richtung Hauptabstützrichtung.

Damit sich der zweite Airbag derart entfalten kann, ist es vorteilhalft, wenn der Einfüllschlauch für den zweiten Airbag elastisch und komprimierbar ist. Werden beide Airbags ausgelöst, so sieht die vorliegende Erfindung vor, dass sich der zweite Airbag über dem ersten Airbag ausbildet. Das heißt, der zweite Airbag ist in diesem Fall vom Airbagmodul etwas weiter entfernt als der erste Airbag. Durch den elastischen Einfüllschlauch bleibt die Gaszufuhr des zweiten Airbags bestehen, während er sich entfaltet. Da die Airbags nur in Unfallsituationen zum Einsatz kommen, sind sie meistens gefaltet hinter Sollbruchstellen des Armaturenbretts angeordnet. Daher ist es sinnvoll, wenn der Einfüllschlauch komprimierbar konzipiert ist. Durch die elastischen Eigenschaften des Einfüllschlauchs kann sich der zweite Airbag in einer weiter entfernten Position vom Airbagmodul als der erste Airbag entfalten und die Gaszufuhr des zweiten Airbags bleibt erhalten, wenn der zweite Airbag sich größtenteils auf dem ersten Airbag entfaltet und daher sich vom Armaturenbrett weiter entfernt hat. Durch den elastischen und komprimierbaren Einfüllschlauch ist dabei stets eine sichere Gaszufuhr für den zweiten Airbag gewährleistet.

Eine weitere Ausführungsform der vorliegenden Erfindung sieht ein Airbagsystem vor, bei dem das Airbagmodul dazu ausgebildet ist, beide Airbags mit unterschiedlichen Innendrücken in Abhängigkeit von einem Steuersignal zu beaufschlagen. Dies ermöglicht es, die Airbags situationsgerecht auszulösen. Mit einem variablen Innendruck der Airbags kann auf unterschiedliche Größen und/oder Massen der Insassen Rücksicht genommen werden. Unterschiedliche Lastfälle können somit durch eine Steuereinheit berücksichtigt werden. Eine Gewichtsuntergrenze kann durch eine sogenannte "5-Prozent-Frau" und eine Gewichtsobergrenze durch einen sogenannten "95-Prozent-Mann" definiert werden. Im Fall der 5-Prozent-Frau liegen 5 Prozent der Frauen unterhalb dieser Gewichtsuntergrenze. Beim 95-Prozent-Mann sind 95 Prozent der Männer leichter als diese Gewichtsobergrenze. Die Beaufschlagung der Airbags mit unterschiedlichen Innendrücken vermag das Spektrum der Lastfälle von der 5-Prozent-Frau bis zum 95-Prozent-Mann abzudecken.

Ein Spezialfall der vorliegenden Erfindung sieht vor, dass der zweite Airbag sich auf einer Wandung des Airbagmoduls direkt abstützt, wenn der erste Airbag nicht ausgelöst wird. Diese Art der Airbagauslösung kommt vornehmlich dann zum Einsatz, wenn der Fahrzeuginsasse sich nicht in einer OoP-Position befindet. Der Insasse sitzt beispielsweise angegurtet auf dem Fahrer- oder Beifahrersitz mit Blickrichtung auf die Fahrbahn. Bei einem Unfall wird in dieser Situation nur der zweite Airbag ausgelöst. Dies entspricht dem Standardfall, wie er heute bereits bekannt ist. Dabei ist es sehr wichtig, dass in dieser Situation der erste Airbag nicht ausgelöst wird, da sonst der Fahrzeuginsasse von dem Airbagsystem verletzt beziehungsweise erdrückt werden könnte. Befindet sich also ein Fahrzeuginsasse in einer normalen Sitzposition, wie eben skizziert, so ist es sogar von großem Nachteil, wenn in dieser Situation beide Airbags auslösen. Der Fahrzeuginsasse würde in diesem Fall durch diese beiden Airbags regelrecht zurückgeschleudert werden. Aus diesem Grund ist eine Steuereinrichtung sinnvoll, die situationsgerecht erkennen kann, wie die Airbags ausgelöst werden sollen. Die Steuereinrichtung erfasst gegenenfalls relevante Daten, wie zum Beispiel Masse der Fahrzeuginsassen, deren Sitzposition und weitere relevante Daten für das Airbagsystem. Dadurch, dass der zweite Airbag nur bedarfsweise ausgelöst wird, wird ein unnötiges Verletzungsrisiko vermieden.

Eine besonders vorteilhafte Weiterbildung der vorliegenden Erfindung sieht vor, dass der zweite Airbag sich auf der dem Airbagmodul abgewandten Oberfläche des ersten Airbags abstützt, wenn beide Airbags ausgelöst werden. Während sich der erste Airbag entfaltet, beginnt ebenfalls der zweite Airbag, sich auf dem ersten Airbag zu entfalten. Durch die vorzugsweise unabhängige Gaszufuhr für die beiden Airbags können beide sich gleichzeitig und unabhängig ausbilden. Sind beide Airbags voll entfaltet, so bilden diese den Kombinationsairbag. Dieser Kombinationsairbag hat ein entsprechend größeres Volumen und kann als zweigeteilter Airbag aufgefasst werden. Diese Art der Ausgestaltung kommt besonders in OoP-Positionen vor oder wenn ein Fahrzeuginsasse sich in einer Komfort- oder Liegeposition befindet. Dadurch, dass diese beiden Airbags sich unter Umständen so schnell wie ein einzelner Airbag entfalten können, kann bei einem Unfall ein effektiver Schutz bereitgestellt werden, auch wenn der Fahrer sich in einer beispielsweise Komfortsitz- oder Liegeposition befindet. Der Kombinationsairbag wird rechtzeitig ausgebildet und stellt ein deutlich größeres Volumen als ein einzelner Airbag zur Verfügung. Da sich der zweite Airbag auf dem ersten Airbag abstützt, besitzt der Kombinationsairbag eine hinreichend hohe Stabilität. Dieser Kombinationsairbag kann sich weiter ins Fahrzeuginnere entfalten als einzelne Airbags, die sich von einem Armaturenbrett aus entfalten. Zwar können die einzelne Airbags entsprechend größer dimensioniert sein, dennoch bieten sie geringeren Schutz als der hier erfindungsgemäß vorgesehene Kombinationsairbag.

Zur Lösung obiger Aufgabe wird erfindungsgemäß auch bereitgestellt ein Verfahren zum Betreiben eines Airbagsystems für ein Fahrzeug, wobei das Airbagsystem einen ersten und zweiten Airbag aufweist, der in bestimmungsgemäßer Hauptabstützrichtung größtenteils über dem ersten Airbag angeordnet ist und wobei beide Airbags zeitgleich auslösbar sind. Es werden entweder beide Airbags miteinander ausgelöst oder nur der zweite Airbag wird ausgelöst, ohne dass der erste Airbag ausgelöst wird.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Airbagsystem beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigen:
Fig. 1 eine Seitenansicht des Airbagsystems im nicht ausgelösten Zustand;
Fig. 2 eine Seitenansicht des Airbagsystems, wobei nur der zweite Airbag sich entfaltet und
Fig. 3 eine Seitenansicht des Airbagsystems, wobei beide Airbags zum Einsatz kommen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

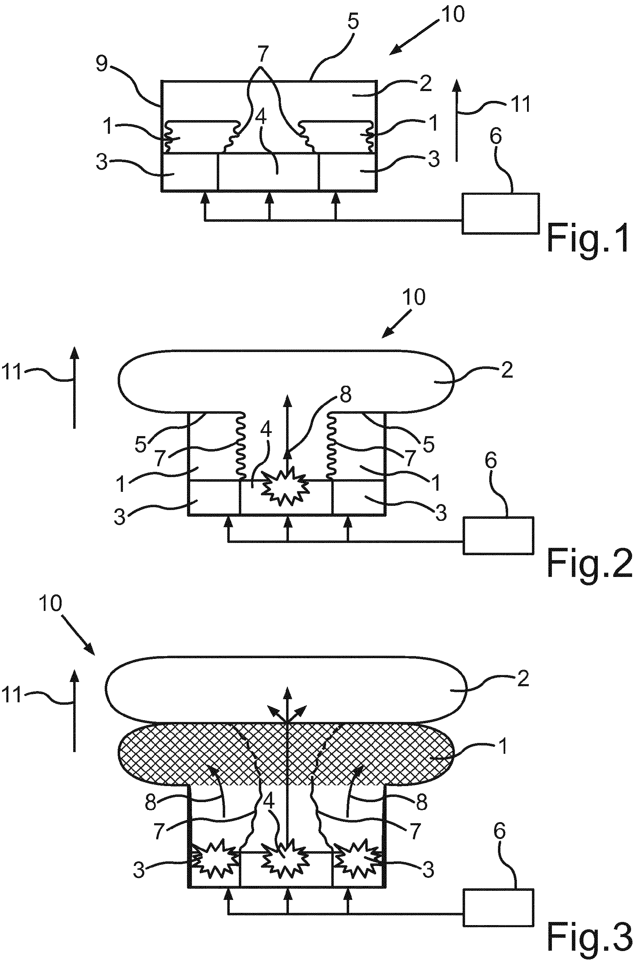

Fig. 1 zeigt die Seitenansicht des Airbagsystems 10 im nicht aktivierten Zustand. Das Airbagmodul 9 ist an eine Steuereinrichtung 6 angeschlossen. Diese Steuereinrichtung 6 ermöglicht es, das Airbagsystem 10 auf verschiedene Art und Weise auszulösen. Innerhalb des Airbagmoduls 9 sind wenigstens zwei verschiedene Airbags angeordnet. Der erste Airbag 1 ist seitlich innerhalb des Airbagmoduls 9 angeordnet. In diesem Beispiel dehnt sich der erste Airbag 1 nicht bis zur Oberfläche 5 des Airbagmoduls 9 aus. Die Oberfläche 5 des Airbagmoduls 9 ist in den meisten Fällen die Armaturenebene. Zwischen den beiden Teilen des ersten Airbags 1 und oberhalb von ihm ist ein zweiter Airbag 2 innerhalb des Airbagmoduls 9 angeordnet. Die Oberfläche 5 des Airbagmoduls 9 schließt das Airbagmodul 9 nach oben ab. Die beiden sichtbaren Teile des ersten Airbags 1 in Fig. 1 müssen jedoch nicht getrennt ausgebildet sein, sie können ringförmig angeordnet sein und eine Einheit bilden. Der erste Airbag 1 weist eine Gaszufuhr 3 auf, welche ebenfalls ringförmig angeordnet sein kann. Der zweite Airbag 2 weist eine separate Gaszufuhr 4 auf. Wird von der Steuereinrichtung 6 kein Signal an das Airbagmodul 9 zur Auslösung gesendet, so verbleibt das Airbagsystem im nicht aktivierten Zustand, wie in Fig. 1 dargestellt.

Wird von der Steuereinrichtung 6 ein unfallrelevantes Ereignis detektiert oder ein entsprechendes Signal erfasst, so wird ein Signal zur Auslösung an das Airbagsystem 10 gesendet. Befinden sich dabei die Fahrzeuginsassen in der sogenannten Standard-Sitzposition, so wird nur der zweite Airbag ausgelöst. In diesem Fall wird nur der Gasgenerator 4 für den zweiten Airbag 2 aktiviert. Der andere Gasgenerator 3 für den ersten Airbag bleibt unbetätigt. Infolge der Gasentwicklung durch den Gasgenerator 4 strömt durch den Einfüllschlauch 7 Gas 8 in den zweiten Airbag 2. Der Einfüllschlauch 7 ist dabei gasdicht ausgeführt, sodass das durch den Gasgenerator 4 erzeugte Gas 8 ausschließlich durch den Einfüllschlauch 7 in den zweiten Airbag 2 hineinströmt und ihn aufbläst. Ein Entweichen des Gases 8 durch den Einfüllschlauch 7 ist nicht möglich. Da die beiden Airbags unabhängige Gaszufuhren besitzen, kann der zweite Airbag 2 unabhängig und auch zeitgleich vom ersten Airbag 1 aufgeblasen werden.

Fig. 2 entspricht in seiner Entfaltungsform dem sogenannten Standardairbag, wie er bereits heute in vielen Fahrzeugen vorzufinden ist. Entfaltet sich nur der zweite Airbag 2, wie in Fig. 2 gezeigt, stützt er sich auf der Oberfläche 5 des Airbagmoduls 9 ab. Der zweite Airbag 2 entfaltet sich in Hauptabstützrichtung 11. Er kann sich dabei zum Teil auch auf dem ersten Airbag 1 abstützen. Das Airbagsystem 10 sieht somit vor, dass nicht nur OoP-Lastfälle, sondern auch Standard-Lastfälle abdeckbar sind.

In Fig. 3 ist der Zustand des Airbagsystems gezeigt, wenn beide Airbags ausgelöst werden. In diesem Fall sendet die Steuereinrichtung 6 Signale an das Airbagmodul 9, um beide Airbags zugleich auszulösen und den Kombinationsairbag aufzublasen. Der Kombinationsairbag entfaltet sich wie im Fall von Fig. 2 ebenfalls in Hauptabstützrichtung 11. Diese Situation ist besonders dann vorteilhaft, wenn die Fahrzeuginsassen sich in einer OoP-Position befinden beziehungsweise eine komfortable oder Liegeposition eingenommen haben. Der Gasgenerator 4 entwickelt Gas 8, welches durch den gasdichten Einfüllschlauch 7 hindurchströmt und den zweiten Airbag 2 mit Gas 8 befüllt. Gleichzeitig stellt der Gasgenerator 3 Verbrennungsgase bereit, welche in den ersten Airbag 1 hineinströmen. Da der erste Airbag 1 ringförmig um den Einfüllschlauch 7 angeordnet ist, bildet er sich als Ring aus. Der erste Airbag bildet sich ähnlich wie ein Schwimmring aus. In der Mitte befindet sich in dieser Situation der Einfüllschlauch 7, welcher in Richtung Hauptabstützrichtung 11 den zweiten Airbag 2 ausbildet.

Beide Airbags können zeitgleich und unabhängig voneinander aufgeblasen werden. Dabei ist es nicht nötig, dass die Gase 8 von einem Airbag in den anderen hindurchströmen müssen. Während sich der erste Airbag 1 entfaltet, hebt sich der zweite Airbag 2 nach oben. Dabei hebt sich zugleich der elastische und dehnbare Einfüllschlauch 7 nach oben. Der elastische und komprimierbare Einfüllschlauch 7 hebt sich sozusagen wie eine Ziehharmonika nach oben. Gleichzeitig strömen Verbrennungsgase, bereitgestellt durch den Gasgenerator 4, durch den Einfüllschlauch in den zweiten Airbag 2. Dies bewirkt, dass sich der zweite Airbag 2 auf der Oberfläche des ersten Airbags 1 ausbildet. Der zweite Airbag 2 wird wie in Fig. 2 entfaltet. Zugleich jedoch wird in Fig. 3 der zweite Airbag 2, während er sich entfaltet, gleichzeitig nach oben gehoben. Das Airbagsystem 10 ermöglicht es, dass zwei Airbags sich ähnlich schnell entfalten, wie ein einzelner Airbag. Sie stützen sich gegenseitig in Richtung Hauptabstützrichtung 11 ab und stellen ein deutlich größeres Airbagvolumen bereit. Zugleich kann die benötigte Aufblaszeit ähnlich kurz gehalten werden, wie es bisher bei Airbags der Fall ist.

Befindet sich ein Fahrzeuginsasse in einer OoP-Position, so kann durch das in Fig. 3 gezeigte Airbagsystem rechtzeitig ein hinreichend großes Airbagvolumen bereitgestellt werden. Der erste Airbag 1 und der zweite Airbag 2 bilden den Kombinationsairbag. Dieser Kombinationsairbag gelangt in derselben Zeit näher an den Fahrzeuginsassen heran, als es in Fig. 2 der Fall ist. Damit kann im Falle eines Unfalls verhindert werden, dass ein Fahrzeuginsasse, der sich in einer OoP-Position befunden hat, durch das Fahrzeug umhergeschleudert wird und sich zusätzlich verletzt. Besonders schützenswert ist bei Fahrzeuginsassen der Kopf. Die Aufgabe des Airbagsystems 10 ist es, den Kopf eines Fahrzeuginsassen im Falle eines Unfalls rechtzeitig zu erreichen und ihn zu schützen. Befindet sich der Fahrzeuginsasse in einer OoP-Position, so ist ein höchsteffektiver Schutz für ihn, vor allem für den Kopf, nicht mit einem wie in Fig. 2 gezeigten wirkenden Standardairbag zu erreichen. Kommt es zu einem Unfall, bei dem der Fahrzeuginsasse zwar angegurtet ist, sich aber in einer OoP-Position befindet, so würde der Gurt in erster Linie den Torso des Fahrzeuginsassen festhalten. Sein Kopf jedoch würde sich aufgrund der Trägheit weiterbewegen. Um nun in dieser Situation schwere Verletzungen, wie zum Beispiel Genickbruch, zu vermeiden, sollte der Kopf abgestützt werden. Dies gelingt mit einem Airbagsystem 10 nach der vorliegenden Erfindung, wie in Fig. 3 gezeigt. Beide Airbags würden in diesem Fall ausgelöst werden und erreichen den Kopf des Fahrzeuginsassen rechtzeitig, um ihn wirksam zu schützen. Hätte sich der Fahrzeuginsasse hingegen in einer Standard-Sitzposition befunden, so hätte sich nur der zweite Airbag 2 entfaltet, wie in Fig. 2 gezeigt.

Die vorliegende Erfindung erhöht die Sicherheit der Fahrzeuginsassen und ermöglicht es, dass diese neue Sitzpositionen einnehmen können, ohne dabei allzu große Abstriche in punkto Sicherheit hinnehmen zu müssen.

Beim autonomen Fahren können die Fahrzeuginsassen eine OoP-Position einnehmen. Eine solche Position kann beispielsweise das Zurückfahren des Fahrer- oder Beifahrersitzes sein und/oder das Drehen der Sitze. Die Fahrzeuginsassen können sich dabei von dem Airbagmodul 9 entfernen. Kommt es in dieser Situation zu einem Unfall, so bietet ein normaler Standardairbag, wie in Fig. 2 prinzipiell gezeigt, nicht in allen Situationen ausreichenden Schutz. Ein Fahrzeuginsasse würde mit hoher Geschwindigkeit auf den Airbag prallen, in ihn etwas eindringen, ihn sozusagen deformieren und anschließend könnte er mit großer Wucht wieder zurückgeworfen werden. Auch ist es denkbar, dass Fahrzeuginsassen, welche sich in einer OoP-Position befinden, bei einem Standardairbag, wie in Fig. 2 prinzipiell gezeigt, nicht aufgefangen werden. Es könnte demnach sein, dass ein Fahrzeuginsasse im Falle eines Unfalls am Airbag vorbeifliegt und anderweitig aufschlägt und sich dabei schwer verletzt. Im Gegensatz dazu wird durch das Auslösen der beiden Airbags 1 und 2 ein größeres Airbagvolumen in derselben Zeit bereitgestellt, wie es bei einem einzelnen Standardairbag der Fall ist. Der Kombinationsairbag verringert deutlich die Distanz zum Fahrzeuginsassen und verhindert ein unkontrolliertes Umherfliegen dessen im Fahrzeug.

In vorteilhafter Weise ist dieser Kombinationsairbag derart ausgerichtet, dass insbesondere der Kopf der Fahrzeuginsassen wirksam geschützt wird. Die Kombination aus erstem und zweitem Airbag 1 und 2 erhöht die Sicherheit von Fahrzeuginsassen bei OoP-Positionen erheblich. Dadurch, dass beide Airbags sich zeitgleich und unabhängig voneinander entfalten lassen, kann der Kombinationsairbag aus erstem und zweitem Airbag 2 ähnlich rasch bereitgestellt werden wie ein Standardairbag, wie prinzipiell in Fig. 2 gezeigt. Dieser Kombinationsairbag füllt ein größeres Volumen aus und hilft, Fahrzeuginsassen bei einem Unfall zu schützen, wenn diese sich in OoP-Positionen befinden. Das in dieser Erfindung offenbarte Airbagsystem 10 kann flexibel auf verschiedene Lastfälle reagieren und dabei jeweils einen effektiven Schutz für die Fahrzeuginsassen bereitstellen.

## Patentansprüche

1. Airbagsystem (10) für ein Fahrzeug mit
- einem ersten Airbag (1) und
- einem zweiten Airbag (2), der in bestimmungsgemäßer Hauptabstützrichtung (11) größtenteils über dem ersten Airbag (1) angeordnet ist, wobei beide Airbags (1, 2) in einem gemeinsamen Airbagmodul (9) angeordnet sind und von dem gemeinsamen Airbagmodul (9) befüllbar sind,
- beide Airbags (1, 2) zeitgleich auslösbar sind, wobei
- beide Airbags (1, 2) unabhängig voneinander auslösbar sind,
- einer Steuereinrichtung (6), welche ausgebildet ist, beide Airbags (1, 2) anzusteuern, und
- das Airbagsystem (10) so ausgebildet ist, dass der zweite Airbag (2) auslösbar ist, ohne dass der erste Airbag (1) ausgelöst wird,
**dadurch gekennzeichnet, dass**
- die Steuereinrichtung (6) ausgebildet ist, ein Signal zur Auslösung an das Airbagsystem (10) zu senden, wobei
- die Steuereinrichtung ausgebildet ist, eine Sitzposition eines Fahrzeuginsassen zu erfassen und
- die Steuereinrichtung (6) ausgebildet ist, bei einer vorgegebenen Standard-Sitzposition nur den zweiten Airbag (2) auszulösen, wenn der Fahrzeuginsasse sich in der vorgegebenen Standard-Sitzposition befindet, wobei der zweite Airbag (2) sich auf einer Wandung des Airbagmoduls (9) direkt abstützt, wenn der erste Airbag (1) nicht ausgelöst wird.

2. Airbagsystem (10) nach Anspruch 1, wobei das Airbagmodul (9) Gasgeneratoren (3,4) zum Befüllen der Airbags (1, 2) aufweist.

3. Airbagsystem (10) nach einem der vorhergehenden Ansprüche, wobei der zweite Airbag (2) über einen gasdichten Einfüllschlauch (7) befüllbar ist.

4. Airbagsystem (10) nach Anspruch 3, wobei der erste Airbag (1) ringförmig um den Einfüllschlauch (7) herum angeordnet ist.

5. Airbagsystem (10) nach Anspruch 3 oder 4, wobei der Einfüllschlauch (7) für den zweiten Airbag (2) elastisch und komprimierbar ist.

6. Airbagsystem (10) nach einem der Ansprüche 1 bis 5, wobei das Airbagmodul (9) dazu ausgebildet ist, beide Airbags (1, 2) in Abhängigkeit von einem Steuersignal mit unterschiedlichen Innendrücken zu beaufschlagen.

7. Airbagsystem (10) nach einem der Ansprüche 1 bis 6, wobei der zweite Airbag (2) sich auf der dem Airbagmodul (9) abgewandten Oberfläche (5) des ersten Airbags (1) abstützt, wenn beide Airbags (1, 2) ausgelöst werden.

8. Verfahren zum Betreiben eines Airbagsystems (10) für ein Fahrzeug, wobei das Airbagsystem (10) aufweist:
- einen ersten Airbag (1) und
- einen zweiten Airbag (2), der in bestimmungsgemäßer Hauptabstützrichtung (11) größtenteils über dem ersten Airbag (1) angeordnet ist, wobei beide Airbags (1, 2) in einem gemeinsamen Airbagmodul (9) angeordnet sind und von dem gemeinsamen Airbagmodul (9) befüllbar sind,
- eine Steuereinrichtung (6), welche ausgebildet ist, beide Airbags (1, 2) anzusteuern (1, 2), wobei
- beide Airbags (1, 2) zeitgleich auslösbar sind und entweder beide Airbags (1, 2) miteinander ausgelöst werden, oder
- mittels der Steuereinrichtung (6) ein Signal zur Auslösung an das Airbagsystem (10) gesendet wird, wobei eine Sitzposition eines Fahrzeuginsassen erfasst wird und bei einer vorgegebenen Standard-Sitzposition nur der zweite Airbag (2) ausgelöst wird, wenn der Fahrzeuginsasse sich in der vorgegebenen Standard-Sitzposition befindet, wobei der zweite Airbag (2) ausgelöst wird, ohne dass der erste Airbag (1) ausgelöst wird, wobei der zweite Airbag (2) sich auf einer Wandung des Airbagmoduls (9) direkt abstützt, wenn der erste Airbag (1) nicht ausgelöst wird.

## Claims

1. Airbag system (10) for a vehicle having
- a first airbag (1) and
- a second airbag (2) which is disposed in intended main supporting direction (11) for the main part above the first airbag (1), wherein both airbags (1, 2) are disposed in a shared airbag module (9) and can be filled by the shared airbag module (9),
- both airbags (1, 2) can be triggered simultaneously, wherein
- both airbags (1, 2) can be triggered independently of one another,
- a control device (6), which is configured
to control both airbags (1, 2), and
- the airbag system (10) is designed such that the second airbag (2) can be triggered without the first airbag (1) being triggered,
**characterised in that**
- the control device (6) is designed to send to the airbag system (10) a signal for triggering, wherein
- the control device is configured to detect a seat position of a vehicle occupant and
- the control device (6) is configured in the case of a predetermined standard seat position to trigger only the second airbag (2) when the vehicle occupant is located in the predetermined standard seat position, wherein the second airbag (2) rests directly on a wall of the airbag module (9) if the first airbag (1) is not triggered

2. Airbag system (10) according to claim 1, wherein the airbag module (9) has gas generators (3, 4) for filling the airbags (1, 2).

3. Airbag system (10) according to any of the preceding claims, wherein the second airbag (2) can be filled via a gas-tight filling hose (7).

4. Airbag system (10) according to claim 3, wherein the first airbag (1) is disposed in an annular manner around the filling hose (7).

5. Airbag system (10) according to claim 3 or 4, wherein the filling hose (7) for the second airbag (2) is elastic and compressible.

6. Airbag system (10) according to any of claims 1 to 5, wherein the airbag module (9) is designed to provide both airbags (1, 2) depending on a control signal with different inner pressures.

7. Airbag system (10) according to any of claims 1 to 6, wherein the second airbag (2) is supported on the surface (5), facing away from the airbag module (9), of the first airbag (1), if both airbags (1, 2) are triggered.

8. Method for operating an airbag system (10) for a vehicle, wherein the airbag system (10) has:
- a first airbag (1) and
- a second airbag (2) which is disposed in intended main supporting direction (11) for the main part above the first airbag (1), wherein both airbags (1, 2) are disposed in a shared airbag module (9) and can be filled by the shared airbag module (9),
- a control device (6), which is configured to control both airbags (1, 2), wherein
- both airbags (1, 2) can be triggered simultaneously and either both airbags (1, 2) are triggered together, or
- by means of the control device (6) a signal for triggering is sent to the airbag system (10), wherein a seat position of a vehicle occupant is detected and in the case of a predetermined standard seat position only the second airbag (2) is triggered when the vehicle occupant is located in the predetermined standard seat position, wherein the second airbag (2) is triggered without the first airbag (1) being triggered, wherein the second airbag (2) rests directly on a wall of the airbag module (9) if the first airbag (1) is not triggered.

## Revendications

1. Système de coussins de sécurité gonflables (10) pour un véhicule avec
- un premier coussin de sécurité gonflable (1) et
- un second coussin de sécurité gonflable (2), qui est disposé en majeure partie au-dessus du premier coussin de sécurité gonflable (1) dans la direction d'appui principale (11) conforme à l'usage prévu, dans lequel les deux coussins de sécurité gonflables (1, 2) sont disposés dans un module de coussin de sécurité gonflable (9) commun et peuvent être remplis par le module de coussin de sécurité gonflable (9) commun,
- les deux coussins de sécurité gonflables (1, 2) peuvent être déclenchés simultanément, dans lequel
- les deux coussins de sécurité gonflables (1, 2) peuvent être déclenchés indépendamment l'un de l'autre,
- un dispositif de commande (6), lequel est réalisé pour commander les deux coussins de sécurité gonflables (1, 2), et
- le système de coussins de sécurité gonflables (10) est réalisé de sorte que le second coussin de sécurité gonflable (2) peut être déclenché sans que le premier coussin de sécurité gonflable (1) ne soit déclenché,
**caractérisé en ce que**
- le dispositif de commande (6) est réalisé pour envoyer un signal de déclenchement au système de coussins de sécurité gonflables (10), dans lequel
- le dispositif de commande est réalisé pour détecter une position assise d'un occupant de véhicule et
- le dispositif de commande (6) est réalisé pour ne déclencher que le second coussin de sécurité gonflable (2), dans le cas d'une position assise standard prédéfinie, lorsque l'occupant de véhicule se trouve dans la position assise standard prédéfinie, dans lequel le second coussin de sécurité gonflable (2) s'appuie directement sur une paroi du module de coussin de sécurité gonflable (9) lorsque le premier coussin de sécurité gonflable (1) n'est pas déclenché.

2. Système de coussins de sécurité gonflables (10) selon la revendication 1, dans lequel le module de coussin de sécurité gonflable (9) présente des générateurs de gaz (3, 4) destinés à remplir les coussins de sécurité gonflables (1, 2).

3. Système de coussins de sécurité gonflables (10) selon l'une quelconque des revendications précédentes, dans lequel le second coussin de sécurité gonflable (2) peut être rempli par l'intermédiaire d'un tuyau de remplissage (7) étanche au gaz.

4. Système de coussins de sécurité gonflables (10) selon la revendication 3, dans lequel le premier coussin de sécurité gonflable (1) est disposé de manière annulaire autour du tuyau de remplissage (7).

5. Système de coussins de sécurité gonflables (10) selon la revendication 3 ou 4, dans lequel le tuyau de remplissage (7) pour le second coussin de sécurité gonflable (2) est élastique et peut être comprimé.

6. Système de coussins de sécurité gonflables (10) selon l'une quelconque des revendications 1 à 5, dans lequel le module de coussin de sécurité gonflable (9) est réalisé pour soumettre les deux coussins de sécurité gonflables (1, 2) à l'effet de pressions intérieures différentes en fonction d'un signal de commande.

7. Système de coussins de sécurité gonflables (10) selon l'une quelconque des revendications 1 à 6, dans lequel le second coussin de sécurité gonflable (2) s'appuie sur la surface (5) du premier coussin de sécurité gonflable (1) opposée au module de coussin de sécurité gonflable (9), lorsque les deux coussins de sécurité gonflables (1, 2) sont déclenchés.

8. Procédé pour faire fonctionner un système de coussins de sécurité gonflables (10) pour un véhicule, dans lequel le système de coussins de sécurité gonflables (10) présente :
- un premier coussin de sécurité gonflable (1) et
- un second coussin de sécurité gonflable (2), qui est disposé en majeure partie au-dessus du premier coussin de sécurité gonflable (1) dans la direction d'appui principale (11) conforme à l'usage prévu, dans lequel les deux coussins de sécurité gonflables (1, 2) sont disposés dans un module de coussin de sécurité gonflable (9) commun et peuvent être remplis par le module de coussin de sécurité gonflable (9) commun,
- un dispositif de commande (6), lequel est réalisé pour commander les deux coussins de sécurité gonflables (1, 2), dans lequel
- les deux coussins de sécurité gonflables (1, 2) peuvent être déclenchés simultanément et soit les deux coussins de sécurité gonflables (1, 2) sont déclenchés l'un avec l'autre, soit
- un signal de déclenchement est envoyé au système de coussins de sécurité gonflables (10) au moyen du dispositif de commande (6), dans lequel une position assise d'un occupant de véhicule est détectée et, dans le cas d'une position assise standard prédéfinie, seul le second coussin de sécurité gonflable (2) est déclenché lorsque l'occupant de véhicule se trouve dans la position assise standard prédéfinie, dans lequel le second coussin de sécurité gonflable (2) est déclenché sans que le premier coussin de sécurité gonflable (1) ne soit déclenché, dans lequel le second coussin de sécurité gonflable (2) s'appuie directement sur une paroi du module de coussin de sécurité gonflable (9) lorsque le premier coussin de sécurité gonflable (1) n'est pas déclenché.
